# EUROPÄISCHE PATENTSCHRIFT

(11) **EP 3 455 190 B1**
(45) Veröffentlichungstag und Bekanntmachung des Hinweises auf die Patenterteilung: **05.11.2025**
(21) Anmeldenummer: 17723081.0
(22) Anmeldetag: 11.05.2017
(51) Int. Cl.: C04B 28/24, C04B 28/26, C04B 40/00, F01N 1/24, C04B 111/52

(54) **VERFAHREN ZUR HERSTELLUNG EINES FORMTEILS AUS GLASFASER- UND/ODER MINERALFASERMATERIAL UND FERTIGUNGSEINHEIT HIERFÜR**
METHOD FOR MANUFACTURING A SHAPED ARTICLE MADE FROM GLASS OR MINERALFIBER AND APPARATUS
PROCÉDÉ DE MISE EN FORME UN ARTICLE COMPRENANT DES FIBRES DE VERRE OU DE MINERAUX ET UN DISPOSITIF

(30) Priorität: 12.05.2016 DE 102016108800
(43) Veröffentlichungstag der Anmeldung: 20.03.2019
(73) Patentinhaber: DBW Advanced Fiber Technologies GmbH, 37120 Bovenden (DE)
(72) Erfinder: BAUER, Thomas Franz Josef, 37120 Bovenden (DE)
(74) Vertreter: Kröncke, Rolf
(86) Internationale Anmeldenummer: PCT/EP2017/061335
(87) Internationale Veröffentlichungsnummer: WO 2017/194677

(56) Entgegenhaltungen:
- EP-A2- 1 745 901
- EP-A2- 1 990 170
- EP-A2- 2 103 578
- WO-A1-2008/076352
- WO-A1-2012/113867
- WO-A1-2014/062943
- DE-A1- 10 116 141
- DE-A1- 10 118 136
- DE-A1- 102006 034 073
- DE-A1- 102008 059 770
- DE-A1- 2 257 789
- DE-A1- 2 941 606
- DE-B- 1 176 546
- DE-C2- 2 760 151
- THOMASON J L ED - OKSMAN KRISTIINA: "Glass fibre sizing: A review", COMPOSITES PART A, ELSEVIER, AMSTERDAM, NL, vol. 127, 9 September 2019 (2019-09-09), XP085871380, ISSN: 1359-835X, [retrieved on 20190909], DOI: 10.1016/J.COMPOSITESA.2019.105619
- ANONYMOUS: "Infrarotstrahlung", WIKIPEDIA, 4 October 2024 (2024-10-04), pages 1 - 11, XP093276145, Retrieved from the Internet <URL:https://de.wikipedia.org/w/index.php?title=Infrarotstrahlung&oldid=249115426>
- ANONYMOUS: "SAFE USE INSTRUCTIONS SHEET Commercial product powertex�, powertex� LE, powerfil�, E-Glas, powertex� S, basalt continuous, powermat� E, powermat�, powermat HT, powermat� S, powermat� S VT, powermat� E NGM, powerflex, powernet", SAFE USE INSTRUCTIONS SHEET, 3 July 2013 (2013-07-03), pages 1 - 10, XP093275828, Retrieved from the Internet <URL:https://www.dbw.de/fileadmin/PDF/powertex_LE/SUIS_-_Continuous_glass_fiber_products-en_V1.pdf>

## Beschreibung

Die vorliegende Erfindung betrifft ein Verfahren zur Herstellung eines Formteils aus Glasfaser- und/oder Mineralfasermaterial mit einem anorganischen Bindemittel. Die Härtung des anorganischen Bindemittels erfolgt hierbei mittels elektromagnetischer Strahlung zur Ausbildung des Formteils, dabei ist das Werkzeug derart ausgebildet, dass es zumindest teilweise durchlässig für die elektromagnetische Strahlung zur Aushärtung ist und das anorganische Bindemittel ist eines, das durch elektromagnetische Strahlung härtbar ist. Schließlich wird eine Fertigungseinheit für die Herstellung eines Formteils aus Glasfaser- und/oder Mineralfasermaterial und einem anorganischen Bindemittel bereitgestellt. Diese Fertigungseinheit umfasst dabei eine Einrichtung zur Bereitstellung eines Werkzeugs zur Ausbildung des Formteils, eine Einrichtung zum Einbringen des Glasfaserund/oder Mineralfasermaterials und des anorganischen Bindemittels in das Werkzeug, eine Einrichtung zum Erzeugen elektromagnetischer Strahlung zum Härten des anorganischen Bindemittels zur Ausbildung des Formteils, sowie eine Einrichtung zum Entnehmen des ausgeformten Formteils aus dem Werkzeug.

### Stand der Technik

Die Verwendung von anorganischen Bindemitteln zur Herstellung von Formteilen ist bekannt. So beschreibt die DE 10 2005 001 796 A1 ein Formteil für den Brandschutz bei dem ein anorganisches Armierungsgewebe als Trägermaterial für den Baustoff dient. Als Trägermaterial kann ein Glasfasergittergewebe dienen. Als anorganisches Bindemittel wird dabei ein Natriumsilikat und/oder Kaliumsilikat eingesetzt. Es werden weiterhin rohrförmige Formteile, die mit dem Gittergewebe des gewünschten Durchmessers gewickelt und mit dem entsprechend eingesetzten Bindemittel getränkt werden, um entsprechende Formteile auszubilden.

Die DE 195 32 291 beschreibt Schalldämpfer aus einer äußeren Hülle und einer inneren Hülle mit hitzebeständigen Fasern. Es werden Bindemittelbeschichtungen zur Fixierung der Fasern eingesetzt. Geeignete Bindemittel schließen solche auf Basis von Siliziumdioxid und Aluminiumoxid als Hauptbestandteil ein. Diese Bindemittel werden aufgebracht und in einem Trocknungsprozess entwässert.

Die DE 31 44 193 A1 beschreibt einen schallabsorbierenden Körper der insbesondere für einen Einbau im Schalldämpfer geeignet ist. Das Bindemittel ist zum Beispiel eines verklebt mittels Wasserglaskleber, um die Formteile miteinander zu verkleben.

Aus der DE 10 2007 032 431 A1 ist ein Aufbau zur Wärmeisolierung bekannt, dabei wird zur Verbindung von zwei Schichten ein anorganischer Klebstoff und/oder Hochtemperaturklebstoff eingesetzt, zum Beispiel ein Wasserglas basierter Klebstoff.

Aus der DE 20 2014 100 285 U1 ist ein thermisches Isolationsformteil für eine Abgasanlage eines Verbrennungsmotors bekannt, bei dem ein anorganisches Bindemittel insbesondere ein Schichtsilikat eingesetzt wird. Dieses Isolationsformteil wird dabei heißverpresst.

Bei der Herstellung von Formkörpern oder Formteilen für die akustische Isolation oder die thermische Isolation, zum Beispiel in Schalldämpfern, werden heutzutage im Wesentlichen organische Bindemittel eingesetzt. So werden zum Beispiel Thermoplasten in Form von Fixierungsfäden oder als Bindemittel verwendet. In der WO 2010/122076 werden verschiedene Arten von Bindemittel bzw. Fixierungsmittel für Glasfaserprodukte beschrieben, dabei werden neben reaktiven Klebern, Heißklebern, anorganischen Klebern oder Wasserglas insbesondere Thermoplasten als geeignete Formen ausgeführt.

Die heute insbesondere im akustischen und isolierenden Bereich von Schalldämpfern eingesetzten Formteile und Formkörper bestehen aus texturierten mineralischen mehrlagig gewickelten Endlosfasern und darin gleichmäßig verteilten organischen Bindemitteln. Der Formkörper wird dabei durch eine thermische Behandlung verfestigt, indem die organischen Bindemittel ausgehärtet werden.

Die WO 2014/062943 A1 beschreibt Schalldämpfervorformen mit geringer Emission des Binders. Die EP 2 103 578 A2 betrifft einen reaktionsgehärteten Faserverbundwerkstoff. Die WO 2008/076352 A1 beschreibt organische Bindemittel für Vorformen von Schalldämpfern, Schalldämpfer und eine Vorrichtung zu deren Herstellung.

Ein Nachteil der aus dem Stand der Technik bekannten schallabsorbierenden Formteile und Formkörper ist, dass sie entweder aufwendig verarbeitet werden müssen, um eine gewünschte Form zu erhalten oder, dass sie ihre Form und den Zusammenhalt zur besseren Verbauung durch den Zusatz organischer Bindemittel erhalten. Die organischen Bindemittel haben jedoch einen niedrigen Schmelz- bzw. Siedepunkt und verbrennen bei hohen Temperaturen, so dass ihre Wirkung als Bindemittel nicht mehr gegeben ist. Darüber hinaus entstehen bei der Verbrennung der organischen Bindemittel zusätzlich Emissionen, die die Umwelt belasten.

Tatsächlich zeigte sich, dass bei Temperaturen von bereits 180°C sich die organischen Bindemittel zersetzen. Dies gilt insbesondere auch für die Schlichte, die auf den Fasern und Rovings vorliegt.

Es besteht daher ein Bedarf Verfahren bereitzustellen, die Formteile aus Glasfasern oder Mineralfasern mit Bindemitteln mit verbesserten mechanischen Eigenschaften bereitstellen. Bisher wurde zur Trocknung der flüssig aufgebrachten organischen oder anorganischen Bindemittel ein Trocknen bei Temperaturen von über 300°C, üblicherweise bei ca. 400°C durchgeführt.

### Beschreibung der Erfindung

Diese Aufgabe wird gelöst durch ein Verfahren gemäß Anspruch 1 zur Herstellung eines Formteils bestehend aus Glasfaser- und/oder Materialfasermaterial mit einem anorganischen Bindemittel, mit den Schritten
- Bereitstellen eines Werkzeugs zum Formen des Glasfaser- und/oder Mineralfasermaterials zur Ausbildung des Formteils;
- Einbringen des Glasfaser- und/oder Mineralfasermaterials und des anorganischen Bindemittels in das Werkzeug;
- Niedrighärten des anorganischen Bindemittels bei unter 120°C mittels Radiofrequenzstrahlung oder Mikrowellenstrahlung zur Ausbildung des Formteils;
   wobei im Schritt des Aushärtens die Temperatur des Werkzeugs nicht über 100°C, bevorzugt nicht über 90°C liegt;
- Entnehmen des ausgehärteten Formteils bestehend aus Glasfaser- und/oder Mineralfasermaterial mit einem anorganischen Bindemittel aus dem Werkzeug, wobei das Werkzeug derart ausgebildet ist, dass es durchlässig für die Radiofrequenzstrahlung oder Mikrowellenstrahlung zur Aushärtung ist und das anorganische Bindemittel mit der Radiofrequenzstrahlung oder Mikrowellenstrahlung härtbar ist und wobei das Glasfaser- und/oder Mineralfasermaterial ein texturiertes Glasfaser- und/oder Mineralfasermaterial ist und/oder wobei das Glasfasermaterial ein E-Glas, S-Glas oder ECR-Glas oder Kombinationen hiervon ist, weiterhin ist das anorganische Bindemittel ein auf Natrium, Kalium und/oder Lithium basierendes Wasserglas, ggf. mit Kieselsol.

Es zeigte sich, dass durch Härten dieses anorganischen Bindemittels mittels der genannten elektromagnetischen Strahlung die Nachteile, wie sie durch bisher eingesetztes Heißverpressen, z.B. bei Temperaturen von 250°C oder höher, auftreten, überwunden werden konnten. So findet keine Zersetzung der Schlichte statt. Darüber hinaus zeigten die erhaltenen Formteile verbesserte mechanische Eigenschaften. So waren Zug- und Druckfestigkeit verbessert. Insbesondere die Reißfestigkeit und Bruchfestigkeit waren stark verbessert. Die erhaltenen Formteile weisen mechanische und akustische Eigenschaften ähnlich oder besser denen von mit organischen Bindemitteln hergestellten Formteilen auf. Es kann aber bei niedrigen Temperaturen gearbeitet werden, so dass weder das Fasermaterial noch das Werkzeug stark erwärmt werden. Durch diese Strahlung wird das Lösungsmittel verdampft, so dass ein Härten dieses Bindemittels auftritt. Die Materialien, d.h. insbesondere die Fasern und das Bindemittel, selbst aber auch die Schlichten werden nicht verbrannt oder verkohlt. Hierdurch können sehr homogene Strukturen geschaffen werden mit hohen Massen bei geringem Energieaufwand.

Darüber hinaus erlaubt das erfindungsgemäße Verfahren eine kurze Prozesszeit und die ungewünschten Emissionen sind deutlich verringert.

Insbesondere erlaubt das Verfahren den Einsatz von Werkzeugen zum Formen des Formteils wobei diese Werkzeuge keiner starken Erwärmung ausgesetzt sind, sondern zum Beispiel Kunststoffe als Werkzeuge eingesetzt werden können.

Es konnte vorliegend festgestellt werden, dass das erfindungsgemäße Verfahren eine Niedrigtemperaturaushärtung bei unter 120°C erlaubt, , wie unter 110°C, und somit ein geringerer Energieeinsatz verglichen mit herkömmlichen Verfahren notwendig ist. So zeigte es sich, dass die Werkzeuge nicht auf Temperaturen von über 100°C erwärmt werden, z.B. auf Temperaturen unter 100°C, wie unter 95°C, z.B. unter 90°C. Dieser Wert bezieht sich insbesondere auf die Temperatur auf der Außenseite des Werkzeugs.

In einer Ausführungsform handelt es sich erfindungsgemäß bei dem Glasfaserund/oder Mineralfasermaterial um texturiertes Glasfaser- und/oder Mineralfasermaterial, wie effekttexturiertes Glasfaser- und/oder Materialfasermaterial. Bei Verwendung von effekttexturierten Fasern kann die eingesetzte Menge pro Volumen reduziert werden ohne dass sich die akustischen Eigenschaften ändern. Dieses kann durch eine gleichmäßige Verteilung im Formteil erklärt werden. Die Reduktion der Menge pro Volumen kann dabei mindestens 10% sein, wie 15% oder mehr oder 20% oder mehr bezogen auf die Menge pro Volumen.

Die Werkzeuge sind dabei so ausgebildet, dass sie zumindest teilweise, wie vollständig durchlässig sind für die Radiofrequenzstrahlung oder Mikrowellenstrahlung , also im Rundfunkbereich oder Mikrowellenbereich zur Aushärtung dieses anorganischen Bindemittels. Die Werkzeuge sind insoweit mindestens derart für diese Strahlungen durchlässig, dass eine Aushärtung dieses anorganischen Bindemittels möglich ist. Es zeigte sich, dass durch Einsatz dieser Radiofrequenzstrahlung oder Mikrowellenstrahlung zum Härten mit entsprechend ausgebildeten Werkzeugen Formteile aus Glasfaser- und/oder Mineralfasermaterial erhältlich sind, insbesondere solche aus texturiertem Glasfasermaterial und/oder Mineralfasermaterial, wie effekttexturiertem Glasfaser- und/oder Mineralfasermaterial, die unter geringerem Energieeinsatz und verringerter Emission von Schadstoffen bereitgestellt werden können.

Dabei kann das Aushärten in dem Werkzeug bereits derart erfolgen, dass von dem eingebrachten Formmaterial und dieses anorganischen Bindemittels ein weiteres Element, wie im Falle eines herzustellenden Schalldämpfers ein heißgasführendes Bauteil zumindest teilweise umschlossen wird.

Unter dem Ausdruck "Glasfaser- und/oder Mineralfasermaterial", im Folgenden auch als Fasermaterial bezeichnet, werden vorliegend entsprechende Fasern zum Beispiel in Form von Endlosfasern verstanden, die als Endlosfilamente vorliegen, insbesondere die als Rovings vorliegen. Unter "Endlos" wird dabei eine Länge von ≥ 250 mm verstanden.

Der Ausdruck "texturiert" bedeutet, dass das Glasfaser- und/oder Mineralfasermaterial, die zum Beispiel als Roving, Garn oder Zwirn vorliegt, mithilfe bekannter Verfahren geöffnet wird. Texturierte Fasern sind im Stand der Technik bekannt und zeichnen sich dadurch aus, dass durch das Öffnen der Faser eine Volumenvergrößerung erreicht wird. Die so texturierten Fasern zeigen aufgrund ihrer Fülligkeit verbesserte thermische und akustische Eigenschaften auf. In einer Ausführungsform handelt es sich bei dem Glasfaser- und/oder Mineralfasermaterial um effekttexturierte Glasfaser- oder Mineralfasermaterialien. Unter dem Ausdruck "effekttexturiert" wird vorliegend verstanden, dass um einen Kern- oder Basisfaden bzw. Roving ein zweiter Faden bzw. Roving (Hauptfaden) umwickelt wird. Sowohl der umwickelte als auch der Basisfaden können dabei entsprechend texturiert sein, das heißt geöffnet vorliegen.

Unter dem Ausdruck "Glasfaser- und/oder Mineralfasermaterial", im Folgenden auch als Fasermaterial bezeichnet, wird sowohl Material aus Glasfasern als auch Material aus Glasfasern und anderen Mineralfasern, wie Basaltfasern oder Mineralwolle, soweit nicht anders ausgeführt, und Mischungen hiervon verstanden.

In einer Ausführungsform handelt es sich erfindungsgemäß bei dem Glasfasermaterial um ein E-Glas, S-Glas oder ECR-Glas oder Kombinationen hiervon.

Diese Gläser können als Endlosglasfaserrovings texturiert oder effekttexturiert vorliegen, geeignete Materialien sind zum Beispiel die Powertex und Powertex LE Fasern der DBW Advanced Fiber Technologies GmbH.

Das in dem erfindungsgemäßen Verfahren eingesetzte Werkzeug ist derart ausgebildet, dass es die genannte elektromagnetische Strahlung zur Aushärtung des Formteils durchlässt. Darüber hinaus ist das Werkzeug zum Beispiel derart ausgebildet, dass überschüssiges Lösungsmittel, üblicherweise Wasser, entweichen kann, zum Beispiel dass der Wasserdampf durch geeignete Öffnungen aus dem Werkzeug austreten kann. Das Werkzeug kann entsprechend mit einer ausreichenden Zahl von Öffnungen zum Herauslassen dieser Mittel ausgestattet sein.

Geeignete Materialien zumindest zur Ausbildung des Teilbereichs des Werkzeuges, der für die genannte elektromagnetische Strahlung durchlässig ist, sind Kunststoffmaterialien, wie Polypropylen (PP), Polyethylen (PE), Polytetrafluorethylen (PTFE), Polyvinylchlorid (PVC) und Mischungen hiervon aber auch Materialien wie Glas oder Keramik. Ein gut geeignetes Material ist Polypropylen. Es zeigte sich, dass sich dieses nur gering erwärmt auf maximal 100°C, wie maximal 95°C, wie maximal 90°C. Dieses gilt insbesondere für die Temperatur an der Außenseite des Werkzeugs

Die Werkzeuge können dabei ein- oder mehrteilig ausgebildet sein und können zusätzlich derart ausgebildet sein, dass sie Freihaltungen für weitere Elemente, wie Rohre oder Abtrennungen, aufweisen. Dadurch ist es möglich heißgasführende Elemente bzw. Bauteile von Schalldämpfern beim Aushärten des Glasfaserund/oder Mineralfasermaterials mit diesem anorganischen Bindemittel zumindest teilweise mit dem Formteil zu umschließen.

Die Werkzeuge können so ausgebildet sein, dass sie von außen mit dem Glasfaserund/oder Mineralfasermaterial und diesem anorganischen Bindemittel befüllt werden können. Eine solche Befüllung kann händisch oder halb- oder vollautomatisch erfolgen. Die Werkzeuge selbst können ebenfalls händisch, halbautomatisch oder vollautomatisch bereitgestellt, geöffnet und/oder geschlossen werden.

Das Fasermaterial, nämlich, das Glasfaser- und/oder Mineralfasermaterial kann zum Beispiel mittels Düse in das Werkzeug eingebracht werden. Das Einbringen kann dabei derart erfolgen, dass beim Eindüsen das Fasermaterial mit diesem anorganischen Bindemittel gleichzeitig eingebracht wird. Alternativ kann die Eindüsung des Fasermaterials und dieses anorganischen Bindemittels getrennt erfolgen. In einer weiteren Ausführungsform kann das Fasermaterial mit diesem anorganischen Bindemittel vorbehandelt sein und wird dann entsprechend beschichtet mit diesem anorganischen Bindemittel in das Werkzeug eingebracht, zum Beispiel eingedüst. Beim Eindüsen kann auch das Texturieren, wie das Effekttexturieren der Fasern erfolgen.

Bei diesem anorganischen Bindemittel handelt es sich um ein auf Natrium, Kalium und/oder Lithium basierendes Wasserglas, gegebenenfalls mit Kieselsol. Bei Kieselsol handelt es sich um ein in Wasser gelöstes SiO₂. Das Bindemittel kann dabei in flüssiger bis pastöser Form vorliegen. Alternativ kann es auch in Pulverform eingebracht werden. Der Anteil des Bindemittels kann dabei bis zu 15 Gew.-% als Feststoff betragen bezogen auf das Formteil mit Faser und Bindemittel als Feststoff. In einer Ausführungsform liegt dabei das Bindemittel in einer Menge von bis zu 10 Gew.-%, wie bis zu 5 Gew.-% Feststoff vor. Das Bindemittel selbst kann dabei in Lösung oder als Dispersion oder Suspension vorliegen und eingesetzt werden. Es kann weitere anorganische Zuschlagsstoffe aufweisen. Geeignete Lösungsmittel sind dabei insbesondere wässrige Lösungsmittel, wie reines Wasser, die als Dispersion, Suspension oder Emulsion vorliegen.

Ein wesentlicher Aspekt des erfindungsgemäßen Verfahrens ist das Härten mit einer Radiofrequenzstrahlung oder Mikrowellenstrahlung, zum Beispiel solche wie sie mit herkömmlichen Strahlungseinheiten erzielt werden. So sind Geräte mit Mikrowellen im Bereich von 2,45 GHz oder Radiofrequenzbereichen von 27,12 MHz erhältlich. Das erfindungsgemäße Verfahren kann dabei in einer Fertigungseinheit halbund/oder vollautomatisch durchgeführt werden. Dabei kann das Werkzeug als Einmalwerkzeug ausgebildet sein. Solche Einmalwerkzeuge schließen auf Kunststoffbasis bestehende Beutel aber auch andere formgebende Werkzeuge ein.

Das erfindungsgemäße Verfahren ist eines, wobei das herzustellende Formteil aus dem Glasfaser- und/oder Mineralfasermaterial und diesem anorganischen Bindemittel besteht.

Diese anorganischen Bindemittel sind zum Beispiel bekannte Silikatbindemittel auf Basis von Natriumsilikat, Kaliumsilikat, Lithiumsilikat oder Mischsilikate hiervon. Weiterhin kann Kieselsol zugesetzt werden, es können auch feste, pulverförmige Silikate, wie Natriumsilikat etc. verwendet werden. Dem Fachmann sind geeignete derartige anorganische Bindemittel zur Anwendung mit Glasfaser- und/oder Mineralfasermaterialien bekannt.

In einer Ausführungsform ist dieses anorganische Bindemittel eines mit einem pH-Wert von größer 9, wie z.B. größer 9,5, wie ≥ 10.

Weiterhin werden so erhältliche Formteile lediglich beschrieben, sind aber nicht Teil der Erfindung. Diese Formteile aus Glasfaser- und/oder Mineralfasermaterial mit diesem anorganischen Bindemittel eignen sich insbesondere als Formteile für akustische und/oder isolierende Zwecke, zum Beispiel als Schalldämpfereinsätze oder andere im Fahrzeugbau verwendete isolierende und/oder akustische Bauteile. Diese Formteile sind zum Beispiel aus texturierten Glasfaser- und/oder Mineralfasermaterialien, wie effekttexturierten Glasfaserund/oder Mineralfasermaterialien.

Diese Formteile zeichnen sich durch eine geringe Emission bei Erwärmung aus und zeigen aufgrund des Verbleibens der Schlichte an den Fasern verbesserte mechanische Eigenschaften auf. Diese Formteile unterscheiden sich von bekannten Formteilen hergestellt durch Heißverpressen oder durch Erwärmen insbesondere durch Erhitzen, wie ein Aufheizen mittels des Werkzeuges während des Herstellungsprozesses dadurch, dass zum Beispiel die Schlichte auf der Faseroberfläche verbleibt. Die Formteile haben verbesserte mechanische Eigenschaften, wie Zug- und Druckfestigkeiten oder Reiß- oder Bruchfestigkeiten.

In einem weiteren Aspekt richtet sich die vorliegende Anmeldung auf eine Fertigungseinheit für ein Formteil aus Glasfaser- und/oder Mineralfasermaterial und diesem anorganischen Bindemittel gemäß Anspruch 8 umfassend eine
- Einrichtung zur Bereitstellung eines Werkzeugs zur Ausbildung des Formteils, wobei dieses Werkzeug durchlässig ist für Radiofrequenzstrahlung oder Mikrowellenstrahlung;
- Einrichtung zum Einbringen des Glasfaser- und/oder Mineralfasermaterials und des anorganischen Bindemittels in das Werkzeug;
- Einrichtung zum Erzeugen von Radiofrequenz- oder Mikrowellenstrahlung zum Niedrigtemperaturhärten unter 120°C des anorganischen Bindemittels zur Ausbildung des Formteils;
- Einrichtung zum Entnehmen des ausgeformten Formteils aus dem Werkzeug, dadurch gekennzeichnet, dass die Einrichtung zum Einbringen des Glasfaserund/oder Mineralfasermaterials eine Düse ist, ggf. ausgebildet zum Texturieren, wie Effekttexturieren dieses Glasfaser- und/oder Mineralfasermaterials und ggf. ausgebildet zur Zufuhr des anorganischen Bindemittels, wobei das anorganische Bindemittel ein auf Natrium, Kalium und/oder Lithium basierendes Wasserglas, ggf. mit Kieselsol, ist.

Diese Fertigungseinheit umfasst eine Einrichtung zur Bereitstellung eines Werkzeuges zur Ausbildung des Formteils. Diese Einrichtung bringt dabei das Werkzeug in die Fertigungseinheit ein und führt diese gegebenenfalls zu den weiteren Einrichtungen der Einheit. Dem Fachmann sind geeignete Einrichtungen zum Bereitstellen und Fördern des Werkzeuges bekannt.

Diese Einrichtung stellt die Werkzeuge dabei derart bereit, dass die Werkzeuge mit ihrem zumindest teilweise für Radiofrequenzstrahlung oder Mikrowellenstrahlung durchlässigen Bereich derart zur Einrichtung zum Erzeugen der Radiofrequenzstrahlung oder Mikrowellenstrahlung geführt werden, dass in dieser Einrichtung die im Werkzeug vorliegenden Materialien entsprechend bestrahlt werden.

Die Fertigungseinheit umfasst weiterhin eine Einrichtung zum Einbringen des Glasfaser- und/oder Mineralfasermaterials und dieses anorganischen Bindemittels in das Werkzeug. Wie bereits oben ausgeführt, kann eine solche Einrichtung eine Eindüsung mit einer entsprechend ausgebildeten Düse umfassen. Dabei kann die Einrichtung derart ausgebildet sein, dass diese das anorganische Bindemittel vor Einbringen in das Werkzeug auf das Glasfaser- und/oder Mineralfasermaterial aufträgt und dann diese entsprechend in das Werkzeug einbringt. Alternativ kann diese Einrichtung derart ausgeführt sein, dass ein Einbringen des Bindemittels und des Glasfaser- und/oder Mineralfasermaterials getrennt oder nacheinander erfolgt. Dem Fachmann sind geeignete Vorrichtungen bekannt. Diese Einrichtungen können gegebenenfalls weiterhin Zuführeinrichtungen zum Zuführen des Glasfaser- und/oder Mineralfasermaterials umfassen sowie Vorratsbehälter für das anorganische Bindemittel und/oder das Fasermaterial usw. Gegebenenfalls kann die Fertigungseinheit und hier die Einrichtung zum Einbringen des Fasermaterials vorgeschaltet eine Einrichtung zum (effekt)-texturieren des Glasfaser- und/oder Mineralfasermaterials aufweisen. Das Texturieren, wie das Effekttexturieren des Fasermaterials kann auch beim Einbringen z.B. insbesondere eine Düse erfolgen.

Die erfindungsgemäße Fertigungseinheit umfasst weiterhin eine Einrichtung zum Erzeugen Radiofrequenzstrahlung oder Mikrowellenstrahlung zum Niedrigtemperaturhärten unter 120°C des anorganischen Bindemittels im Werkzeug zur Ausbildung des gehärteten Formteils. Diese Einrichtung umfasst Mittel zum Erzeugen der gewünschten Radiofrequenzstrahlung oder Mikrowellenstrahlung wie eine Einheit zum Erzeugen einer Mikrowelle oder einer Einheit zum Erzeugen einer Radiofrequenz (Rundfunkfrequenz). Diese Einrichtung ist derart ausgebildet, dass die Radiofrequenzstrahlung oder Mikrowellenstrahlung auf das Werkzeug und hier den für die Radiofrequenzstrahlung oder Mikrowellenstrahlung durchlässigen Bereich des Werkzeuges ausgerichtet ist, so dass diese in das Werkzeug eindringen kann und dort eine Härtung des Formteils erlaubt. Dem Fachmann sind geeignete Einrichtungen bekannt, so kann diese Einrichtung ein Tunnel oder ein Ofen sein, durch die die Werkzeuge auf einer Fördereinheit transportiert werden.

Diese Einrichtung kann weiterhin Elemente enthalten, die das bei der Härtung freigesetzte Lösungsmittel, wie den Wasserdampf, abzieht.

Die Fertigungseinrichtung umfasst weiterhin eine Einrichtung zum Entnehmen des ausgeformten Formteils aus dem Werkzeug. Dazu wird das Werkzeug mit dem fertigen Formteil nach Verlassen der Einrichtung zum Erzeugen von Radiofrequenz- oder Mikrowellenstrahlung zum Aushärten zum Beispiel über Fördermittel zu der Einrichtung zum Entnehmen des ausgeformten Formteils aus dem Werkzeug weitergeführt. Dieses Entnehmen des ausgeformten Formteils kann dabei halbautomatisch oder automatisch durch Öffnen des Werkzeuges geschehen. Das Werkzeug kann dabei ein mehrfach verwendbares Werkzeug oder ein einmal verwendbares Werkzeug sein. Ein solches Werkzeug schließt unter anderem einen Beutel oder andere Strukturen zur Einmalverwendung ein. Ein entsprechendes Entnehmen des ausgeformten Formteils kann bei Einmalartikeln das Zerstören des Werkzeugs beinhalten.

In einer Ausführungsform ist die Einrichtung zum Einbringen des Fasermaterials, z.B. eine Düse, derart ausgebildet, dass sie gleichzeitig ein Benetzen des gegebenenfalls texturierten insbesondere des gegebenenfalls effekttexturierten Glasfaser- und/oder Mineralfasermaterials mit diesem anorganischen Bindemittel beinhaltet.

In einer Ausführungsform weist die Fertigungseinheit dabei eine Steuerungseinheit auf, die halb- oder vollautomatisch die Fertigungseinheit steuert.

In einer weiteren Ausführungsform ist die Fertigungseinheit eine, wobei die Herstellung des Formteils in einem Arbeitsschritt ohne Unterbrechung erfolgt.

In einer weiteren Ausführungsform wird das Werkzeug, aus dem das fertige Formteil entnommen wurde, wieder zu der Einrichtung zum Einbringen des Glasfaserund/oder Mineralfasermaterials und dieses anorganischen Bindemittels in das Werkzeug zurückgeführt, das heißt, dass die Einrichtung zum Führen des Werkzeugs eine Endlosfördereinrichtung aufweisen kann.

Das so hergestellte Formteil ist in einer Ausführungsform ein Schalldämpfereinsatz.

Ein Verfahren zur Herstellung von Schalldämpfern wird weiterhin lediglich beschrieben, ist aber nicht Teil der Erfindung, umfassend den Schritt des Einbringens eines Formteils erhältlich z. B. mit dem erfindungsgemäßen Verfahren bzw. eines beschriebenen Formteils in einen Schalldämpfer oder einen Teil eines Schalldämpfers.

In einer Ausführung davon findet dabei das Aushärten des Formteils nach zumindest teilweisem Umschließen eines heißgasführenden Bauteils statt.

Dem Fachmann sind geeignete Verfahren zur Herstellung des Schalldämpfers bekannt. So kann das Formteil in eine erste Mantelschale oder eine zweite Mantelschale eingebracht bzw. eingesetzt werden oder über ein heißgasführendes Bauteil gezogen werden, sodass dieses heißgasführende Bauteil zumindest teilweise von dem Formteil umschlossen wird. Nach Einbringen des Formteils erfolgt ein Schließen des Schalldämpfers.

In einem weiteren Aspekt wird ein Schalldämpfer hergestellt mit dem beschriebenen Verfahren lediglich genannt, ist aber nicht Teil der Erfindung.

Das nicht erfindungsgemässe Formteil erhältlich mit einem erfindungsgemäßen Verfahren ist eines zur Verwendung als akustisches und/oder isolierendes Bauteil, insbesondere in einem Schalldämpfer.

Die mit dem Verfahren erhältlichen Formteile können auch komplexere Formen einnehmen, insbesondere dreidimensional geformte Formteile. Dabei können diese ausgebildeten Formteile auch eigenstabil sein, sodass sie in einem System einfach einsetzbar sind und gegebenenfalls austauschbar sind.

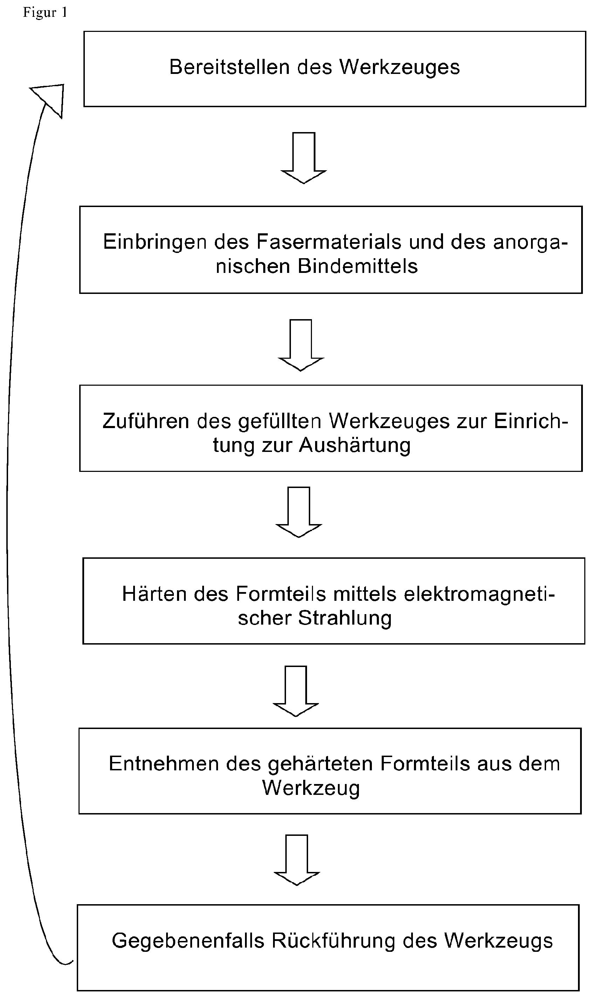

Unter Bezugnahme auf die Abbildung 1 wird das erfindungsgemäße Verfahren noch einmal erläutert. Abbildung 1 ist ein Fließdiagramm des erfindungsgemäßen Verfahrens.

Im ersten Schritt wird das Werkzeug bereitgestellt, um dann im zweiten Schritt in das Werkzeug das Glasfaser- und/oder Mineralfasermaterial und dieses anorganische Bindemittel einzubringen. Wie ausgeführt kann dabei die Faser vorab mit dem Bindemittel benetzt werden, alternativ kann das Glasfaser- und/oder Mineralfasermaterialgleichzeitig mit dem anorganischen Bindemittel oder nacheinander in das Werkzeug eingebracht werden. Im weiteren Schritt wird dann das Werkzeug mit dem eingebrachten nicht ausgehärteten Glasfaser- und/oder Mineralfasermaterial mit dem Bindemittel zur Einrichtung zur Niedrigtemperaturhärtung des Formteils verbracht. Diese Einrichtung weist eine Quelle Radiofrequenzstrahlung oder Mikrowellenstrahlung zur Niedrigtemperaturhärtung unter 120°C des Bindemittels auf.

Im sich darin anschließenden Schritt wird das Glasfaser- und/oder Mineralfasermaterial zum Formteil mittels Radiofrequenzstrahlung oder Mikrowellenstrahlung in der Einrichtung zum Erzeugen Radiofrequenzstrahlung oder Mikrowellenstrahlung zum Härten des anorganischen Bindemittels zur Ausbildung des Formteils ausgehärtet. Nach dem Aushärten wird das Werkzeug mit dem gehärteten Formteil weitergeleitet, um das gehärtete Formteil aus dem Werkzeug zu entnehmen. Gegebenenfalls wird das wieder verwendbare Werkzeug erneut zum Befüllen bereitgestellt.

## Patentansprüche

1. Verfahren zur Herstellung eines Formteils bestehend aus Glasfaser- und/oder Mineralfasermaterial mit einem anorganischen Bindemittel, mit den Schritten:
- Bereitstellen eines Werkzeugs zum Formen des Glasfaser- und/oder Mineralfasermaterials zur Ausbildung des Formteils;
- Einbringen des Glasfaser- und/oder Mineralfasermaterials und des anorganischen Bindemittels in das Werkzeug;
- Niedrigtemperaturhärten des anorganischen Bindemittels bei unter 120°C mittels Radiofrequenzstrahlung oder Mikrowellenstrahlung zur Ausbildung des Formteils, wobei im Schritt des Aushärtens die Temperatur des Werkzeugs nicht über 100°C, bevorzugt nicht über 90°C liegt;
- Entnehmen des ausgehärteten Formteils bestehend aus Glasfaser- und/oder Mineralfasermaterial mit einem anorganischen Bindemittel aus dem Werkzeug, wobei das Werkzeug derart ausgebildet ist, dass es durchlässig für die Radiofrequenzstrahlung oder Mikrowellenstrahlung zur Aushärtung ist und das anorganische Bindemittel mit der Radiofrequenzstrahlung oder Mikrowellenstrahlung härtbar ist, und wobei das Glasfaser- und/oder Mineralfasermaterial ein texturiertes Glasfaser- und/oder Mineralfasermaterial ist und/oder wobei das Glasfasermaterial ein E-Glas, S-Glas oder ECR-Glas oder Kombinationen hiervon ist, weiterhin ist das anorganische Bindemittel ein auf Natrium, Kalium und/oder Lithium basierendes Wasserglas, ggf. mit Kieselsol.

2. Verfahren nach Anspruch 1, wobei das Glasfaser- und/oder Mineralfasermaterial ein effekttexturiertes Glasfaser- und/oder Mineralfasermaterial ist.

3. Verfahren nach einem der vorherigen Ansprüche, **dadurch gekennzeichnet, dass** das für die elektromagnetische Strahlung durchlässige Material eines ist ausgewählt aus PP, PE, PTFE, PVC, Glas, Keramik oder Mischungen hiervon, insbesondere PP ist.

4. Verfahren nach einem der vorherigen Ansprüche, **dadurch gekennzeichnet, dass** das Werkzeug als Einmalwerkzeug, wie ein auf Basis von Kunststoff bestehender Beutel, ausgebildet ist.

5. Verfahren nach einem der vorherigen Ansprüche, **dadurch gekennzeichnet, dass** der Anteil des anorganischen Bindemittels am Formteil maximal 15 Gew.% Feststoff bezogen auf das Formteil ist.

6. Verfahren nach einem der vorherigen Ansprüche, **dadurch gekennzeichnet, dass** die Schritte in einer Fertigungseinheit halb- oder vollautomatisch erfolgt.

7. Verfahren nach einem der vorherigen Ansprüche, **dadurch gekennzeichnet, dass** das Fasermaterial mittels Düse in das Werkzeug eingebracht wird, wobei i) ggf. das Fasermaterial mit anorganischen Bindemitteln vorbehandelt ist oder ii) das Fasermaterial mit dem anorganischen Bindemittel zusammen eingedüst wird.

8. Fertigungseinheit für ein Formteil aus Glasfaser- und/oder Mineralfasermaterial und einem anorganischen Bindemittel umfassend eine
- Einrichtung zur Bereitstellung eines Werkzeugs zur Ausbildung des Formteils, wobei dieses Werkzeug zumindest in Teilbereichen durchlässig ist für Radiofrequenzstrahlung oder Mikrowellenstrahlung;
- Einrichtung zum Einbringen des Glasfaser- und/oder Mineralfasermaterials und des anorganischen Bindemittels in das Werkzeug;
- Einrichtung zum Erzeugen Radiofrequenzstrahlung oder Mikrowellenstrahlung zum Niedrigtemperaturhärten unter 120°C des anorganischen Bindemittels zur Ausbildung des Formteils;
- Einrichtung zum Entnehmen des ausgeformten Formteils aus dem Werkzeug; **dadurch gekennzeichnet, dass** die Einrichtung zum Einbringen des Glasfaserund/oder Mineralfasermaterials eine Düse ist, ggf. ausgebildet zum Texturieren, wie Effekttexturieren dieses Glasfaser- und/oder Mineralfasermaterials und ggf. ausgebildet zur Zufuhr des anorganischen Bindemittels, wobei das anorganische Bindemittel ein auf Natrium, Kalium und/oder Lithium basierendes Wasserglas, ggf. mit Kieselsol, ist.

9. Fertigungseinheit nach Anspruch 8, wobei die Einrichtung zum Einbringen des Fasermaterials ausgebildet ist zum gleichzeitigen Benetzen dieses ggf. texturierten, wie effekttexturierten Glasfaser- und/oder Mineralfasermaterials mit dem anorganischen Bindemittel.

10. Fertigungseinheit nach einem der Ansprüche 8 bis 9, wobei diese mittels Steuerungseinheit halbautomatisch oder vollautomatisch gesteuert wird.

11. Fertigungseinheit nach einem der Ansprüche 8 bis 10, wobei die Herstellung des Formteils in einem Arbeitsschritt ohne Unterbrechung erfolgt.

## Claims

1. Method for producing a molded part consisting of glass fiber and/or mineral fiber material with an inorganic binder, comprising the steps:
- providing a mold for molding the glass fiber and/or mineral fiber material to form the molded part;
- introducing the glass fiber and/or mineral fiber material and the inorganic binder into the mold;
- curing the inorganic binder at a low temperature below 120°C by means of radio frequency radiation or microwave radiation to form the molded part, wherein in the curing step the temperature of the mold does not exceed 100°C, preferably not exceeding 90°C;
- Removal of the cured molded part consisting of glass fiber and/or mineral fiber material with an inorganic binder from the mold,
wherein the mold is designed such that it is permeable to the radio frequency radiation or microwave radiation for curing and the inorganic binder is curable with the radio frequency radiation or microwave radiation, and wherein the glass fiber and/or mineral fiber material is a textured glass fiber and/or mineral fiber material and/or wherein the glass fiber material is E-glass, S-glass, or ECRglass or combinations thereof, and furthermore, the inorganic binder is a sodium, potassium, and/or lithium-based water glass, optionally with silica sol.

2. The method according to claim 1, wherein the glass fiber and/or mineral fiber material is an effect-textured glass fiber and/or mineral fiber material.

3. The method according to one of the previous claims, **characterized in that** the material permeable to electromagnetic radiation is one selected from PP, PE, PTFE, PVC, glass, ceramic, or mixtures thereof, in particular PP.

4. The method according to one of the previous claims, **characterized in that** the mold is designed as a disposable mold, such as a plastic-based bag.

5. The method according to one of the previous claims, **characterized in that** the proportion of inorganic binder in the molded part is a maximum of 15% by weight of solids based on the molded part.

6. The method according to one of the previous claims, **characterized in that** the steps are carried out semi-automatically or fully automatically in a production unit.

7. The method according to one of the previous claims, **characterized in that** the fiber material is introduced into the mold by means of a nozzle, wherein i) the fiber material is pretreated with inorganic binding agents, if necessary, or ii) the fiber material is injected together with the inorganic binding agent.

8. A manufacturing unit for a molded part made of glass fiber and/or mineral fiber material and an inorganic binder, comprising a
- device for providing a mold for forming the molded part, wherein this mold is at least partially permeable to radio frequency radiation or microwave radiation;
- means for introducing the glass fiber and/or mineral fiber material and the inorganic binder into the mold;
- means for generating radio frequency radiation or microwave radiation for lowtemperature curing below 120°C of the inorganic binder for forming the molded part;
- Device for removing the molded part from the mold;
**characterized in that** the device for introducing the glass fiber and/or mineral fiber material is a nozzle, optionally designed for texturing, such as effect texturing, of this glass fiber and/or mineral fiber material and optionally designed for supplying the inorganic binder, wherein the inorganic binder is a sodium, potassium, and/or lithium-based water glass, optionally with silica sol.

9. The production unit according to claim 8, wherein the device for introducing the fiber material is designed to simultaneously wet this glass fiber and/or mineral fiber material, which may be textured, such as effect textured, with the inorganic binder.

10. The production unit according to one of claims 8 to 9, wherein it is controlled semi-automatically or fully automatically by means of a control unit.

11. The production unit according to one of claims 8 to 10, wherein the molded part is produced in a single step without interruption.

## Revendications

1. Procédé de réalisation d'une pièce moulée constitué d'un matériau en fibres de verre et/ou en fibres minérales avec un liant inorganique, comprenant les étapes consistant à :
- fournir un outil pour mouler le matériau en fibres de verre et/ou en fibres minérales afin de former la pièce moulée ;
- introduire le matériau en fibres de verre et/ou en fibres minérales et le liant inorganique dans l'outil ;
- faire durcir à basse température le liant inorganique à moins de 120 °C au moyen d'un rayonnement radiofréquence ou d'un rayonnement micro-ondes pour former la pièce moulée, sachant que dans l'étape de durcissement, la température de l'outil n'est pas supérieure à 100 °C, de préférence n'est pas supérieure à 90 °C ;
- retirer de l'outil la pièce moulée durcie, constituée de matériau en fibres de verre et/ou en fibres minérales avec un liant inorganique, l'outil étant conçu de manière à être perméable au rayonnement radiofréquence ou au rayonnement micro-ondes pour le durcissement, et le liant inorganique pouvant être durci par le rayonnement radiofréquence ou le rayonnement micro-ondes, et le matériau en fibres de verre et/ou en fibres minérales étant un matériau en fibres de verre et/ou en fibres minérales texturé, et/ou le matériau en fibres de verre étant un verre de type E, un verre de type S ou un verre de type ECR ou des combinaisons de ceux-ci, et le liant inorganique étant un verre soluble à base de sodium, de potassium et/ou de lithium, éventuellement avec du sol de silice.

2. Procédé selon la revendication 1,
dans lequel le matériau en fibres de verre et/ou en fibres minérales est un matériau en fibres de verre et/ou en fibres minérales à texturation à effet.

3. Procédé selon l'une des revendications précédentes,
**caractérisé en ce que** le matériau perméable au rayonnement électromagnétique est choisi parmi le PP, le PE, le PTFE, le PVC, le verre, la céramique ou leurs mélanges, en particulier le PP.

4. Procédé selon l'une des revendications précédentes,
**caractérisé en ce que** l'outil est conçu comme un outil à usage unique, tel qu'un sac à base de matière plastique.

5. Procédé selon l'une des revendications précédentes,
**caractérisé en ce que** la proportion de liant inorganique dans la pièce moulée est au maximum de 15 % en poids de matières solides par rapport à la pièce moulée.

6. Procédé selon l'une des revendications précédentes,
**caractérisé en ce que** les étapes sont réalisées de manière semi-automatique ou entièrement automatique dans une unité de fabrication.

7. Procédé selon l'une des revendications précédentes,
**caractérisé en ce que** le matériau fibreux est introduit dans l'outil au moyen d'une buse, sachant que
i) le matériau fibreux est éventuellement prétraité avec des liants inorganiques, ou
ii) le matériau fibreux est injecté ensemble avec le liant inorganique.

8. Unité de fabrication d'une pièce moulée constitué d'un matériau en fibres de verre et/ou en fibres minérales et d'un liant inorganique, comprenant :
- un dispositif de fourniture d'un outil pour former la pièce moulée, cet outil étant au moins en partie perméable au rayonnement radiofréquence ou au rayonnement micro-ondes ;
- un dispositif d'introduction du matériau en fibres de verre et/ou en fibres minérales et du liant inorganique dans l'outil ;
- un dispositif de génération d'un rayonnement radiofréquence ou d'un rayonnement micro-ondes pour le durcissement à basse température, inférieure à 120 °C, du liant inorganique afin de former la pièce moulée ;
- un dispositif de retrait de la pièce moulée de l'outil ;
**caractérisée en ce que**
le dispositif d'introduction du matériau en fibres de verre et/ou en fibres minérales est une buse, éventuellement conçue pour la texturation, par exemple la texturation à effet, de ce matériau en fibres de verre et/ou en fibres minérales, et éventuellement pour l'alimentation en liant inorganique, le liant inorganique étant un verre soluble à base de sodium, de potassium et/ou de lithium, éventuellement avec du sol de silice.

9. Unité de fabrication selon la revendication 8,
dans laquelle le dispositif d'introduction du matériau fibreux est conçu pour mouiller simultanément ce matériau en fibres de verre et/ou en fibres minérales, éventuellement texturé, par exemple à texturation à effet, avec le liant inorganique.

10. Unité de fabrication selon l'une des revendications 8 à 9,
dans laquelle celle-ci est commandée de manière semi-automatique ou entièrement automatique par une unité de commande.

11. Unité de fabrication selon l'une des revendications 8 à 10,
dans laquelle la pièce moulée est réalisée en une seule étape de travail sans interruption.
